# EUROPEAN PATENT APPLICATION

(11) **EP 1 905 634 A1**
(43) Date of publication of application: **02.04.2008**
(21) Application number: 06425657.1
(22) Date of filing: 26.09.2006
(51) Int. Cl.: B60K 35/00, G03B 21/62, G01D 11/28

(54) **Display panel for a motor-vehicle dashboard**

(71) Applicant: C.R.F. SOCIETÀ CONSORTILE PER AZIONI, 10043 Orbassano (Torino) (IT)
(72) Inventor: Repetto, Piermario, 10043 Orbassano (Torino) (IT); Bernard, Stefano, 10043 Orbassano (Torino) (IT)
(74) Representative: Notaro, Giancarlo

(57) **Abstract**

A display panel (1) for a motor-vehicle dashboard has a front surface (3) substantially dark on which there can be displayed symbols or icons (4) and/or wordings or numbers generated by a liquid-crystal display (5) by means of activation of one or more light sources (6) that backlight them. The front surface (3) of the panel is defined by a structured film (10), which has a high transmittance in regard to the light coming from the light source set behind it, and a high absorbance in regard to the light coming from outside. The film (10) comprises a layer (10A) formed by an array of focusing optical elements (11; 15) and an array of areas with another transmittance (12; 18) set substantially in the focal plane of said array of focusing elements (10A), said high-transmittance areas (12; 18) being separated by substantially absorbent areas (13) and being arranged along the optical axes of the focusing optical elements (11; 15).

## Description

The present invention relates to display panels for motor-vehicle dashboards, of the type having a substantially opaque front surface, of a uniform dark colour, for example black or dark grey, on which symbols, icons, or the like can be displayed, as well as wordings, numbers, or graphic images generated, for example, by a liquid-crystal display.

The purpose of the present invention is to provide a panel of the type specified above, in which the presence of the symbols, icons and/or of LCDs is absolutely not perceivable except when said elements are backlighted, said panel having a uniformly black surface.

With a view to achieving the above purpose, the subject of the present invention is a display panel for a motor-vehicle dashboard, having a front surface of a uniform dark colour, on which symbols or icons or images can be displayed, said display panel comprising:
- at least one light source; and
- a substantially opaque mask set in front of said at least one light source, there being formed on said substantially opaque mask transmissive portions defining the symbols or the images to be rendered visible,
said display panel being characterized in that it comprises also a film set in front of the aforesaid opaque mask and comprising:
- a layer, set on the side of the film facing the mask, formed by an array of focusing elements; and
- an array of high-transmittance areas, set substantially in the focal plane of said focusing elements, said high-transmittance areas being separated from one another by substantially absorbent areas and being arranged substantially along the optical axes of said focusing elements.

In a first embodiment, the aforesaid film is of the type in which the array of focusing optical elements is constituted by microspheres of transparent material, a hemisphere of each microsphere being immersed in a layer of absorbent material having a maximum thickness substantially equal to the radius of the microspheres. The thickness of absorbent material varies from point to point within the layer, reaching a maximum value in the peripheral area of each microsphere and a minimum value in a position corresponding to the centre of the microsphere itself. The aforesaid film is positioned in such a way that the "free" hemisphere, i.e., the one not immersed in the absorbent material, faces said opaque mask.

In the case of said first embodiment, the light emitted by the source, by passing through said mask bearing the symbols, icons, or LCDs and impinging upon the microspheres is focused in an axial direction in the area in which the absorbent layer has a minimum thickness and substantially passes through said absorbent layer, with consequent high transmittance. Instead, the light impinging on the side opposite to the one facing said mask is substantially absorbed by the absorbent substrate. The minimal part of light that is not absorbed and is hence transmitted is not in any case substantially reflected back. Said film is consequently substantially transmissive to the light that impinges on the film from the side facing the mask and is uniformly opaque to the light that impinges on the film from the side opposite to the one facing the mask.

In a second embodiment, the array of focusing optical elements is constituted by spherical or aspherical caps made on the face of a substrate of transparent plastic material facing said mask bearing the symbols, icons or LCDs, there being made on the opposite face, for example by means of serigraphy or lithography, a substantially opaque mask, present on which is an array of transmissive pin-holes set substantially in a position corresponding to the axes of said focusing optical elements.

Also in said second embodiment, as in the case of the first embodiment, the light emitted by the source, which passes through said mask bearing the symbols, icons or LCDs and impinges from the side of the caps is focused and traverses said transmissive pin-holes made within said substantially opaque mask, whilst the light which impinges upon the side opposite to said mask is absorbed by said substantially opaque mask, or else passes through said transmissive pin-holes made within said substantially opaque mask to be reflected back only in part. As in the case of the first embodiment, also in the second embodiment the result is that of obtaining a film that is substantially transmissive to the light that impinges on the film from the side facing said mask bearing the symbols, icons or LCDs and substantially opaque to the light that impinges on the film from the side opposite to said mask.

Preferably, set between the light source and the mask bearing the symbols, icons or LCDs is an optical collimator for reducing the divergence of the beam of light coming from the source. In this way, the transmittance of the film is increased. Even in the absence of the collimator, however, the characteristics of the panel according to the invention enable in any case satisfactory results to be obtained as long as the angle formed between the light coming from the source and the direction normal to the aforesaid film does not exceed values of around 30°.

Further characteristics and advantages will emerge from the ensuing description with reference to the annexed plate of drawings, which is provided purely by way of non-limiting example and in which:
Figure 1 is a schematic front view of an instrument panel for the dashboard of a motor vehicle built according to the teachings of the present invention;
Figure 2 is a schematic cross-sectional view of the first embodiment of the device forming the subject of the invention;
Figure 3 is a view at an enlarged scale of a detail of Figure 2; and
Figure 4 is a schematic cross-sectional view at an enlarged scale of the second embodiment of the device forming the subject of the invention.

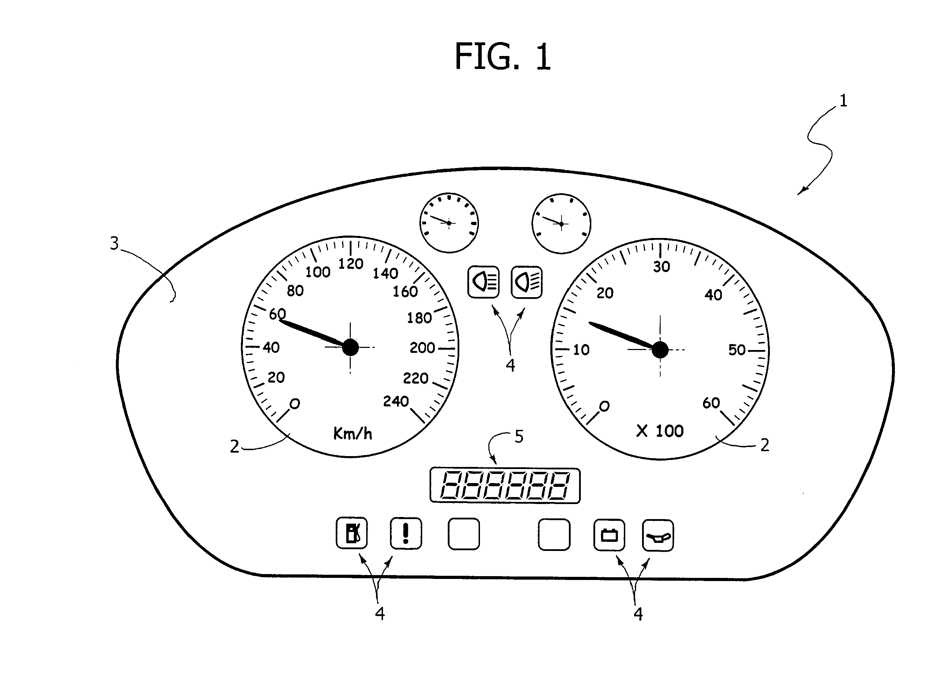

With reference to Figure 1, a motor-vehicle dashboard incorporates a display panel 1 comprising indicating instruments 2 integrated in a substantially black front surface 3, on which symbols or icons 4 can be displayed, as well as wordings or numbers or images generated by a liquid-crystal display 5.

The panel according to the invention is characterized in that the symbols or icons 4 and the liquid-crystal display 5 are absolutely not visible when they are not illuminated by a light source set behind the panel, said panel having a uniformly black surface.

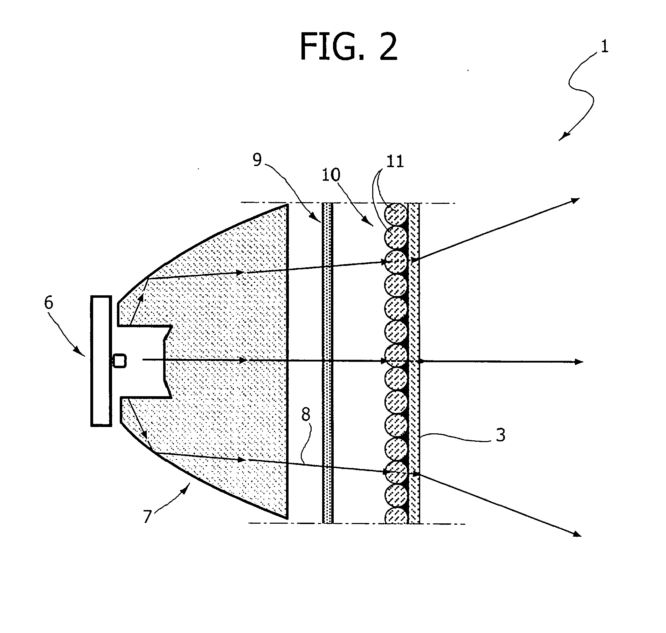

Figure 2 is a schematic illustration of the parts constituting the device according to the invention. The reference number 6 designates a light source, for example of the LED type. Preferably, a light source is provided for each symbol, icon or LCD to be rendered visible, each light source being chosen of the desired colour according to the type of signal that must be generated. In the case of the preferred embodiment illustrated in the drawings, the light leaving the source 6 is collimated, by means of a collimator 7 of any type in itself known, for example of the lightguide or reflection type, in a beam 8 of rays directed substantially parallel to the direction normal to the front surface 3 of the panel 1. The collimated beam traverses first of all an opaque mask 9, which includes a transmissive portion, i.e., a portion at least partially transparent to light, defining the symbol or icon to be rendered visible, or else a liquid-crystal display, operating in transmission. The light that emerges from the opposite side of the mask 9 impinges then upon a film 10, which is designed to transmit the light coming from the source 6 and to absorb the light coming from the opposite direction (from the right in the drawings), in such a way as to appear uniformly black when viewed from the side opposite to the source.

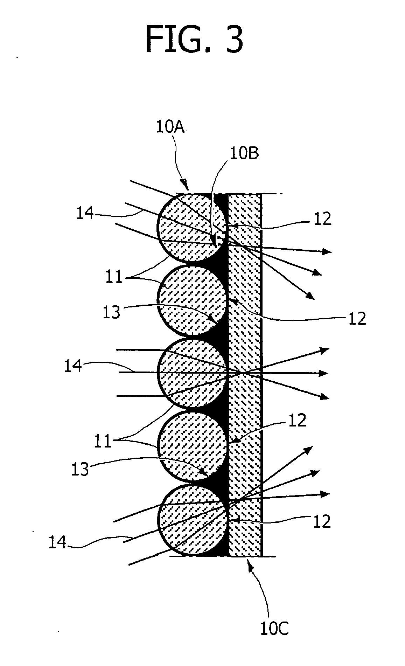

The structured film 10 comprises, in the first embodiment illustrated in Figure 3, a structure in itself of a known type. A film of this type is, for example, marketed with the trademark "Vikuiti XRVS 120" by the firm 3M for applications on image projectors. However, in the first embodiment illustrated herein, the present invention proposes a new use of said film, in a framework not strictly connected to the one for which it was produced, and for solving a problem not strictly connected to the one for which it was produced. The reference to said known film is, however, useful for the purposes of an immediate and ready implementation of the invention.

With reference to Figure 3, the film 10 comprises a first layer 10A, facing the mask 9, formed by an array of focusing optical elements made up of microspheres 11 of transparent material. Each microsphere has a hemisphere immersed in a layer 10B made of optically absorbent material, located on the side facing outwards and having a thickness substantially equal to the radius of the microspheres 11. As may be seen in Figure 3, the microspheres are substantially tangential to one another, and the layer 10B has its opposite surface substantially coinciding with the plane tangential to the spheres, so that the layer 10B has a thickness substantially zero in areas corresponding to the points of tangency between the spheres and said theoretical plane. In this way, said points of tangency constitute an array of high-transmittance areas 12, which are separated from one another by substantially absorbent areas 13 and are arranged substantially along the axes 14 of the focusing optical elements made up of the microspheres 11. The film 10 further comprises at least one substrate 10C made of transparent plastic material applied on the outer surface of the substrate 10B of absorbent material, said substrate 10C having a supporting function.

With the solution illustrated in Figure 3, the light emitted by the source 6 which passes through said mask 9 bearing the symbols, icons, or LCDs 5 and impinges on the "free" side of the microspheres 11 is focused in an axial direction and substantially passes through the absorbent layer in the areas 12 of minimum thickness, with consequent low absorption and, hence, high transmittance. The light incident from outside, i.e., from the side opposite to said mask 9 bearing the symbols, icons or LCDs, impinges mostly on the areas 13 of the substrate 10B and is substantially absorbed. The minimal part of light coming from outside that impinges on the areas of minimum thickness 12 is substantially transmitted within the microspheres 11 but is not substantially reflected back, so that the film 10 is substantially opaque to the light incident from outside. A transparent layer 14, made of plastic material, is preferably applied on the outer side of the external layer 10B.

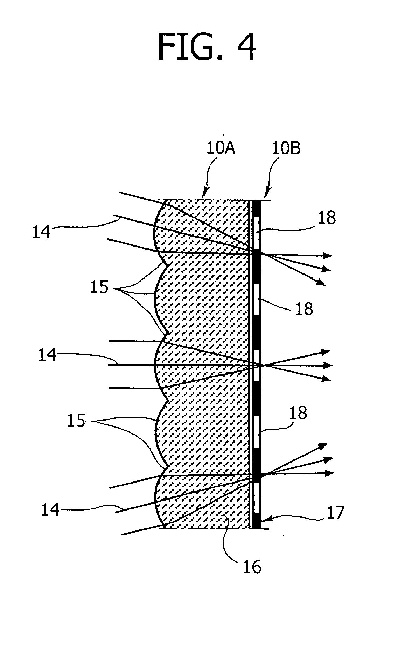

Figure 4 illustrates a second embodiment of the invention in which the film 10 comprises an array of focusing optical elements formed by spherical or aspherical caps 15 made on one of the two faces of a substrate of transparent plastic material 16. Made for example by serigraphy on the opposite face of the substrate 16 is an opaque mask 17, provided on which is an array of transmissive pin-holes 18 set substantially in positions corresponding to the optical axes 19 of the focusing elements 15. As in the case of Figure 2, the light emitted by the source 6 which passes through said mask 9 bearing the symbols, icons or LCDs and impinges on the side of the caps 15 is focused and traverses the film passing through the transmissive pin-holes 18 made within the opaque mask 17. The light impinging from outside is instead absorbed by the mask 17, or else in part passes through the transmissive pin-holes 18 and only to a minimal extent is reflected back. As in the case of Figure 3, also in this case the result is that of obtaining a structured film substantially opaque to the light incident from outside and substantially transparent to the light incident on the film from the side of said mask 9 bearing the symbols, icons or LCDs.

In general, the light that impinges on the film from the side of the mask 9 is focused in a focal region the dimension of which depends upon the divergence of the beam incident on said microspheres 11 or on said array of focusing elements 15. In fact, also in the case where said focusing elements constituting said array 15 are aspherical caps and said focusing elements are hence corrected from spherical aberration, only the rays that impinge on the structured film 10 in a direction perpendicular to the plane of the structured film 10 itself are focused in a point on the optical axis 19, where the rays that impinge on the structured film 10 with a different angle are focused in points that do not lie on the optical axis 10. Said rays will be transmitted by the structured film 10 only if the diameter of the transmissive pin-holes 18 is sufficiently large. On the other hand, larger dimensions of the transmissive pin-holes 19 imply a higher transparency of the structured film 10 also to the light incident from the side opposite to that of the mask 9, the latter being an effect that jeopardizes in part the performance thereof.

In order to maximize the transmittance of the structured film 10 to the light incident on said structured film 10 from the side of the mask 9, albeit maintaining a low transparency to the light incident on said structured film 10 from the side opposite to that of said mask 9, it is therefore advantageous for the divergence of the incident beam to be as small as possible, a fact that renders desirable the use of a collimation system 7. It is also desirable for said mask 9, in a position corresponding to the high-transmittance regions, to be completely transparent instead of translucid, i.e., to transmit the incident light without diffusing it.

In general, the maximum angle that the light coming from the source can form with respect to the direction normal to the panel 1, in order to have satisfactory results, is around 30°. It should likewise be noted how the divergence of the light leaving the structured film 10 is decidedly greater than the divergence of the beam incident on said structured film 10 from the side of the mask 9. This is due to the principle known in optics as "conservation of the étendue", whereby the product of the solid angle in which the beam propagates and the cross section of the beam itself is maintained constant in an optical system following upon successive refractions. To a first approximation it may hence be stated that, if A is the surface of the cross section of a single microsphere 11 or of a single focusing element 15 and A' is the area of the focal region, Ω is the solid angle for the beam incident on the single microsphere 11 or on a single focusing element 15, and Ω' is the solid angle for the beam leaving the structured film 10, according to the present invention, the following law applies: Ω'=Ω*A/A'. Since A is much greater than A', in general the divergence of the beam leaving the structured film 10 will be much greater than the divergence of the beam incident upon said structured film 10. The area A' of the focal region depends in turn upon the solid angle of the incident beam and upon the focal length d of said microsphere 11 or of said single focusing element 15.

In the case where at least a portion of said mask 9 is constituted by a backlighted LCD 5, it is expedient for the angle of vision of said LCD 5, determined by the divergence of the beam leaving the backlighting device and by the optical behaviour of the different layers constituting said LCD 5, to be limited so as to maximize the transmittance of the structured film 10. The final angle of vision perceived by the user will be enlarged, thanks to the effect of said microspheres 11 or of the array of focusing elements 15 described in the previous paragraph. In the case of coupling of the structured film 10 with an LCD 5 it is hence expedient not to use standard LCDs 5, in which typically a field of vision as wide as possible is persued, but rather personalized solutions with a narrow and predefined field of vision.

Of course, without prejudice to the principle of the invention, the details of construction and the embodiments may vary widely with respect to what is described and illustrated herein purely by way of example, without thereby departing from the scope of the present invention.

## Claims

1. A display panel for a motor-vehicle dashboard, having a front surface (3) of uniform dark colour, on which symbols, icons, or the like can be displayed, said display panel comprising:
- at least one light source (6); and
- a substantially opaque mask (9) set in front of said at least one light source (6), on said substantially opaque mask (9) there being formed transmissive portions defining the symbols or the images to be rendered visible,
said display panel being **characterized in that** it likewise comprises a film (10) set in front of the aforesaid opaque mask (9) and comprising:
- a layer (10A), set on the side of the film facing the mask, formed by an array of focusing elements (11; 15); and
- an array of high-transmittance areas (12;18), set substantially in the focal plane of said focusing elements (11; 15), said high-transmittance areas (12; 18) being separated from one another by substantially absorbent areas (13) and being arranged substantially along the optical axes of said focusing elements (11; 15).

2. The display panel according to Claim 1,
**characterized in that** set between the light source (6) and the aforesaid opaque mask (9) is an optical collimator element (7) for expanding and collimating the light coming from the light source (6) in a beam having a reduced divergence and substantially parallel to the direction normal to the aforesaid film (10).

3. The display panel according to Claim 1,
**characterized in that** the array of focusing optical elements is made up of microspheres (11) made of transparent material, at least part of each microsphere (11) being immersed in a substrate (10B) made of absorbent material.

4. The display panel according to Claim 3,
**characterized in that** the aforesaid microspheres (11) are substantially tangential to one another and the aforesaid substrate of absorbent material (10B) has a surface opposite to the aforesaid opaque mask (9) that is substantially tangential to said microspheres (11), in such a way that said substrate of absorbent material (10B) has areas of minimum thickness having high transmittance in areas corresponding to the points of tangency between the microspheres and said surface opposite to the aforesaid opaque mask (9).

5. The display panel according to Claim 4,
**characterized in that** said film (10) further comprises at least one further substrate (10C) made of transparent plastic material applied on the outer surface of said substrate (10B) of absorbent material.

6. The display panel according to Claim 3,
**characterized in that** said film is of the type marketed with the trademark "Vikuiti XRVS 120" by the US firm 3M.

7. The display panel according to Claim 1,
**characterized in that** said array of focusing optical elements is formed by spherical or aspherical caps (15) made on one of the two faces of a substrate (10A) of transparent plastic material, on the other face of said substrate (10A) there being made an opaque mask (10B) on which an array of pin-holes is provided, which are set substantially in positions corresponding to the optical axes (19) of said focusing optical elements (15).

8. The display panel according to Claim 1,
**characterized in that** a number of sources associated to different symbols or images are provided.

9. The display panel according to Claim 8,
**characterized in that** each source is designed to emit light of a pre-set colour as a function of the type of symbol or image to which it is associated.

10. The display panel according to Claim 1,
**characterized in that** said substantially opaque mask (9), formed on which are transmissive portions defining the symbols or images to be rendered visible, is at least in part occupied by a display of the liquid-crystal (LCD) type (5) and that at least one of said light sources (6) constitutes the backlighting system of said LCD (5).

11. The display panel according to Claim 10,
**characterized in that** said display of the LCD type (5) is designed for having a total field of vision smaller than 120°.

12. The display panel according to Claim 1,
**characterized in that** said transmissive portions are coloured.

## Amended claims

### Amended claims in accordance with Rule 137(2) EPC.

**1.** A motor-vehicle dashboard **characterised in that** it comprises a display panel, having a front surface (3) of uniform dark colour, on which symbols, icons, or the like can be displayed, said display panel comprising:
- at least one light source (6); and
- a substantially opaque mask (9) set in front of said at least one light source (6), on said substantially opaque mask (9) there being formed transmissive portions defining the symbols or the images to be rendered visible, said transmissive portions being made by means of serigraphy or lithography, wherein said display panel comprises a film (10) set in front of the aforesaid opaque mask (9) and comprising:
- a layer (10A), set on the side of the film facing the mask, formed by an array of focusing elements (11; 15); and
- an array of high-transmittance areas (12;18), set substantially in the focal plane of said focusing elements (11; 15), said high-transmittance areas (12; 18) being separated from one another by substantially absorbent areas (13) and being arranged substantially along the optical axes of said focusing elements (11; 15) wherein set between the light source (6) and the aforesaid opaque mask (9) is an optical collimator element (7) for expanding and collimating the light coming from the light source (6) in a beam having a reduced divergence and substantially parallel to the direction normal to the aforesaid film (10).

**2.** The display panel according to Claim 1, **characterized in that** the array of focusing optical elements is made up of microspheres (11) made of transparent material, at least part of each microsphere (11) being immersed in a substrate (10B) made of absorbent material.

**3.** The display panel according to Claim 2, **characterized in that** the aforesaid microspheres (11) are substantially tangential to one another and the aforesaid substrate of absorbent material (10B) has a surface opposite to the aforesaid opaque mask (9) that is substantially tangential to said microspheres (11), in such a way that said substrate of absorbent material (10B) has areas of minimum thickness having high transmittance in areas corresponding to the points of tangency between the microspheres and said surface opposite to the aforesaid opaque mask (9).

**4.** The display panel according to Claim 43, **characterized in that** said film (10) further comprises at least one further substrate (10c) made of transparent plastic material applied on the outer surface of said substrate (10B) of absorbent material.

**5.** The display panel according to Claim 2, **characterized in that** said film is of the type marketed with the trademark "Vikuiti XRVS 120" by the US firm 3M.

**6.** The display panel according to Claim 1, **characterized in that** said array of focusing optical elements is formed by spherical or aspherical caps (15) made on one of the two faces of a substrate (10A) of transparent plastic material, on the other face of said substrate (10A) there being made an opaque mask (10B) on which an array of pin-holes is provided, which are set substantially in positions corresponding to the optical axes (19) of said focusing optical elements (15) .

**7.** The display panel according to Claim 1, **characterized in that** a number of sources associated to different symbols or images are provided.

**8.** The display panel according to Claim 7, **characterized in that** each source is designed to emit light of a pre-set colour as a function of the type of symbol or image to which it is associated.

**9.** The display panel according to Claim 1, **characterized in that** said substantially opaque mask (9), formed on which are transmissive portions defining the symbols or images to be rendered visible, is at least in part occupied by a display of the liquid-crystal (LCD) type (5) and that at least one of said light sources (6) constitutes the backlighting system of said LCD (5).

**10.** The display panel according to Claim 9, **characterized in that** said display of the LCD type (5) is designed for having a total field of vision smaller than 120°.

**11.** The display panel according to Claim 1, **characterized in that** said transmissive portions are coloured.
